(19) Europäisches Patentamt European Patent Office Office européen des brevets

(11) **EP 1 889 765 A1**

(12) **EUROPEAN PATENT APPLICATION**

(43) Date of publication:
   **20.02.2008 Bulletin 2008/08**

(51) Int Cl.:
   **B60T 7/22** (2006.01)

(21) Application number: **07075676.2**

(22) Date of filing: **13.08.2007**

(84) Designated Contracting States:
   **AT BE BG CH CY CZ DE DK EE ES FI FR GB GR
   HU IE IS IT LI LT LU LV MC MT NL PL PT RO SE
   SI SK TR**
   Designated Extension States:
   **AL BA HR MK YU**

(30) Priority: **17.08.2006 US 506059**

(71) Applicant: **Delphi Technologies, Inc.
   Troy, Michigan 48007 (US)**

(72) Inventors:
   • **Weaver, Richard A.
   Brighton, MI 48116 (US)**
   • **Widmann, Glenn R.
   Noblesville, IN 46062 (US)**
   • **Turner, Douglas D.
   Lake Orion, MI 48362 (US)**

(74) Representative: **Denton, Michael John et al
   Delphi European Headquarters,
   64 avenue de la Plaine de France,
   Paris Nord II,
   B.P. 65059, Tremblay en France
   95972 Roissy Charles de Gaulle Cedex (FR)**

(54) **Collision prediction and mitigation method for a vehicle**

(57)    A potential collision is predicted by comparing estimates of the time-to-brake (TTB) and the time-to-turn (TTT) of a host vehicle (10) with a computed time-to-collision (TTC) (24; 64, 66, 76). The collision is deemed to be unavoidable when the smaller of TTB and TTT is greater than TTC. The TTT estimate is based in part on the lateral acceleration capability of the vehicle (10), and the lateral acceleration is initialized to a low value corresponding to its instantaneous capability (52), and is set incrementally higher than the actual lateral acceleration when the driver initiates evasive turning (54). The TTT and TTB estimates are increased by the time required to pre-charge the vehicle brakes (70, 80) so that brake pre-charging can be automatically initiated (74, 84) when required to optimize collision mitigation due to braking.

FIG. 1

EP 1 889 765 A1

## Description

TECHNICAL FIELD

The present invention relates to collision prediction for a motor vehicle, and more particularly to a prediction and mitigation method that takes into account the dynamic collision avoidance capability of the vehicle.

BACKGROUND OF THE INVENTION

It has been proposed to install a forward-looking radar or other ranging sensor on a vehicle for purposes of collision sensing. Various collision avoidance or collision mitigating actions can be taken depending on the imminence of a potential collision event. Such actions include, for example, warning the driver, initiating or maximizing braking, and arming or even deploying supplemental restraints for passenger protection. For example, the U.S. Patent No. 6,084,508 to Mai et al. initiates emergency braking of a vehicle when it is determined that a collision with a detected obstacle can no longer be avoided by steering corrections or braking. A collision is deemed to be unavoidable according to Mai et al. when the target range is less than the minimum braking distance or the required steering evasion radius is less than the current or minimum steering radius.

A concern associated with collision predicting systems, particularly those that initiate collision avoidance or collision mitigating actions, is the potential for false alarms -- that is, a situation in which the system initiates an action prematurely or unnecessarily. For this reason, there is a tendency to overstate the vehicle's turning and braking capability. For example, assuming that the coefficient-of-friction between the vehicle tires and the road surface is reasonably high can eliminate most false alarms. However, this will severely limit the effectiveness of the system in situations where the vehicle is traveling on a low coefficient-of-friction surface such as a snowy or icy road. It will also reduce the amount of pre-collision braking that can be initiated prior to a collision in which the driver fails to initiate any evasive maneuver; and statistical studies show that this type of collision accounts for nearly 40% of all collisions. Accordingly, what is needed is an improved collision prediction and mitigation method that protects against false alarms and yet provides effective collision mitigation on low coefficient of friction surfaces and in situations where the driver fails to make evasive maneuvers.

SUMMARY OF THE INVENTION

The present invention is directed to an improved collision prediction and mitigation method that takes into account the dynamic collision avoidance capability of the vehicle to optimize collision mitigation. Estimates of the time-to-brake (TTB) and the time-to-turn (TTT) are compared with the calculated time-to-collision (TTC). A collision is deemed to be unavoidable when the smaller of TTB and TTT is greater than TTC. The TTT estimate is based in part on a lateral acceleration parameter, and that parameter is initialized to a low value corresponding to initial turning action of the vehicle, and is set incrementally higher than the actual lateral acceleration when the driver initiates evasive turning. Also, the TTT and TTB estimates are increased by the time required to pre-charge the vehicle brakes so that pre-charging can be automatically initiated when required to optimize collision mitigation due to braking.

BRIEF DESCRIPTION OF THE DRAWINGS

FIG. 1 is a diagram of host and target vehicles;
FIG. 2 is a simplified block diagram of a vehicle collision mitigation method according to the present invention; and
FIGS. 3A, 3B and 3C together constitute a flow diagram illustrating the method of the present invention. The portion of the flow diagram depicted in FIG. 3A determines if a steering solution or a braking solution should be selected; the portion of the flow diagram depicted in FIG. 3B describes the steering solution; and the portion of the flow diagram depicted in FIG. 3C describes the braking solution.

DESCRIPTION OF THE PREFERRED EMBODIMENT

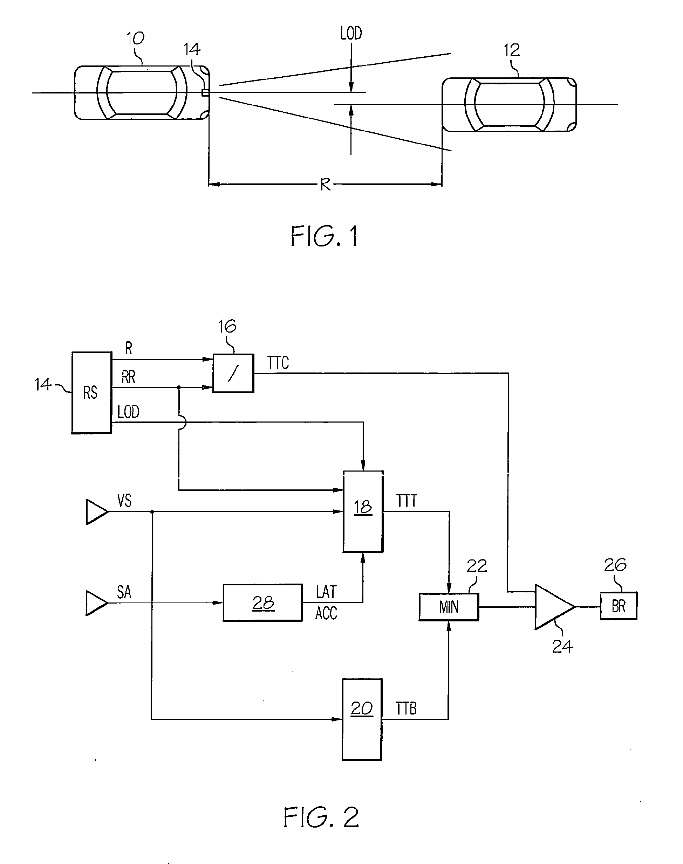

The diagram of FIG. 1 depicts a host vehicle 10 and a target vehicle or other obstacle in the forward path of the host vehicle 10. The host vehicle 10 is equipped with a system including a radar ranging sensor 14 for carrying out the collision prediction and mitigation method of the present invention. The host vehicle 10 is moving in the direction of the target vehicle 12, which may be moving or stationary. The ranging sensor 14, which may also be used for other vehicular applications such as adaptive cruise control, provides three parameters of interest: range R, range-rate RR, and lateral offset distance LOD. The range and lateral offset distance parameters R and LOD are designated in the illustration of FIG. 1; the range-rate parameter RR is the closing velocity, or the velocity of the host vehicle 10 relative to that of the target vehicle 12. In addition to the ranging sensor 14, the host vehicle 10 is equipped with a vehicle speed sensor and a turning sensor such as a steering wheel angle sensor or a yaw rate sensor.

In situations where the host vehicle 10 is closing on the target vehicle 12, the time remaining before the host vehicle 10 collides with the target vehicle 12 can be calculated according to the quotient R/RR. That time is referred to herein as the time-to-collision, or TTC. The TTC and the LOD parameters are continuously updated as the host vehicle 10 approaches the target vehicle 12, and the collision mitigation system aboard the host vehicle 10 must determine if and when to initiate automatic braking to mitigate the severity of the collision.

In general, the driver of the host vehicle 10 can avoid an impending collision with the target vehicle 12 by steering to change the heading of host vehicle 10 and/or by braking the host vehicle. The turning sensor and the LOD parameter provided by the ranging sensor 14 allow the host vehicle 10 to determine if the collision can be avoided by steering. This is achieved by computing the time-to-turn, or TTT, and comparing it to TTC. Similarly, the speed VS and the known braking characteristics of the host vehicle 10 allow the host vehicle 10 to determine if the collision can be avoided by braking. This is achieved by computing the time-to-brake, or TTB, and comparing it to TTC.

The block diagram of FIG. 2 is a simplified representation of the collision prediction and mitigation method carried out by the host vehicle 10 according to this invention. The R and RR parameters provided by ranging sensor 14 are supplied to block 16, which calculates time-to-collision TTC according to the quotient R/RR. The LOD parameter, the vehicle speed VS and a lateral acceleration parameter LAT_ACC are supplied to block 18, which calculates the time-to-turn TTT. This is achieved by using VS, LAT_ACC and the road coefficient of friction COF to calculate the turning radius R, computing the length of the curved travel path required to negotiate the lateral offset distance LOD, and using the computed travel path length and the range-rate parameter RR to compute the time-to-turn TTT. Finally, the vehicle speed VS is supplied to block 20, which computes the time-to-brake TTB.

The block 22 selects the minimum (MIN) of TTT and TTB, and supplies it to block 24 for comparison with TTC. If the smaller of TTT and TTB is greater than TTC, a collision with the target vehicle 12 is deemed to be unavoidable, and activation of the vehicle brakes 26 is automatically initiated to mitigate the severity of the collision.

The block 28 determines the lateral acceleration parameter LAT_ACC used in determining time-to-turn TTT based on the output of a turning sensor; in the illustrated embodiment, the turning sensor provide a measure of the steering angle SA. To address the situation where the driver of the host vehicle 10 fails to initiate any evasive steering, LAT_ACC is initialized to a low value corresponding to initial turning action of the vehicle, and is increased toward its maximum capability as the turning sensor indicates that the driver has initiated evasive steering.

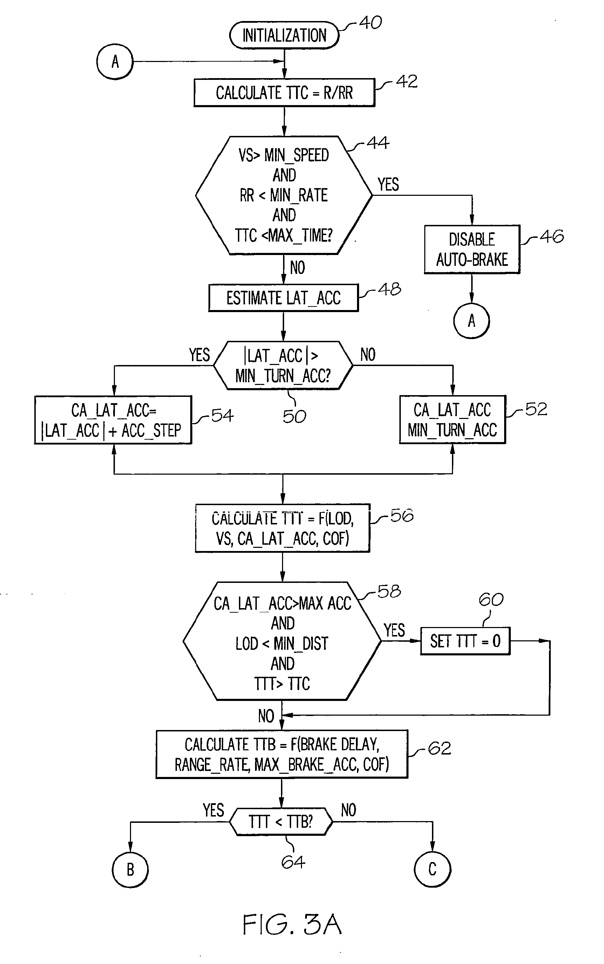

The flow diagram of FIGS. 3A-3C illustrates the method of this invention in the manner of a high level routine periodically executed by a microprocessor-based controller aboard host vehicle 10. Following initialization of various parameters and control variables at block 40 of FIG. 3A, the block 42 is executed to calculate the time-to-collision TTC according to the quotient R/RR. The block 44 defines a set of three enabling conditions for automatic collision mitigation braking, and the block 46 disables automatic braking if one or more of the conditions are not met. First, the vehicle speed VS must exceed a calibrated minimum speed such as 8 MPH; second, the range-rate RR (i.e., the closing speed) must be less than a calibrated speed such as 5 MPH; and third, the time-to-collision TTC must be less than a calibrated maximum time such as one minute. If block 46 disables automatic braking, the blocks 42-44 are re-executed after some dwell period. If the enabling conditions of block 44 are met, the block 48 estimates the lateral acceleration LAT_ACC of the host vehicle 10. As indicated above, LAT_ACC can be estimated based on the measured steering angle SA, in combination with known dynamic characteristics of the host vehicle 10. Alternately, LAT_ACC can be estimated based on a measure of yaw rate, although yaw rate measurements tend to lag rather than lead lateral acceleration of the host vehicle 10 due to steering.

The blocks 50-54 select the value of a collision mitigation lateral acceleration parameter, CM_LAT_ACC, used to compute the time-to-turn TTT. The block 50 compares the absolute value of the estimated lateral acceleration LAT_ACC to a calibrated value MIN_TURN_ACC corresponding to initial turning action of the host vehicle 10. By way of example, MIN_TURN_ACC may have a value of approximately 5.0 m/sec$^2$. The term |LAT_ACC| will be less than MIN_TURN_ACC until the driver of host vehicle 10 initiates a substantial evasive steering maneuver. So long as |LAT_ACC| < MIN_TURN_ACC, the block 52 sets CM_LAT_ACC equal to MIN_TURN_ACC. When |LAT_ACC| equals or exceeds MIN_TURN_ACC, the block 54 sets CM_LAT_ACC equal to the sum of |LAT_ACCEL| and a calibrated incremental amount ACC_STEP. Consequently, CM_LAT_ACC is maintained at a relatively low value (MIN_TURN_ACC) until the driver of host vehicle 10 initiates a substantial evasive steering maneuver, and then is set to a value that is incrementally higher than the estimated lateral acceleration achieved by the vehicle 10.

Block 56 computes the time-to-turn TTT based in part on the aforementioned lateral acceleration parameter CM_LAT_ACC as indicated above. Specifically, the parameter CM_LAT_ACC is used as the lateral acceleration $A_L$ in the equation:

$$R = VS^2 / (A_L * COF)$$

where R is the host vehicle turning radius, VS is the host vehicle speed, and COF is the coefficient of friction between its tires and the road surface. The coefficient of friction COF is normally set to a value of nearly 1.0 (dry road surfaces), but is lowered when the locking characteristics of the brakes indicate that the road surface is wet or slippery. So long as CM_LAT_ACC is maintained at the minimum value MIN_TURN_ACC, the calculated turning radius R will be relatively large, which in turn, results in a relatively high value of the time-to-turn TTT.

In other words, the calculated time-to-turn TTT is maintained artificially high until the driver of the host vehicle 10 initiates a substantial evasive steering maneuver. This essentially rules out a turning solution to an impending collision in cases where the driver fails to take evasive steering action. Ruling out a turning solution in this manner results in earlier and more effective automatic braking as will be evident in view of the following.

Blocks 58-60 determine if driver-initiated evasive steering is sufficient to rule out automatic braking for collision mitigation. Block 58 defines a set of three conditions for ruling out collision mitigation braking, and block 60 disables automatic braking by setting the time-to-turn TTT to zero if all of the conditions are met. First, the term CM_LAT_ACC must be greater than a calibrated maximum lateral acceleration MAX_ACC; second, the lateral offset distance LOD must be less than a calibrated distance MIN_DIST; and third, the time-to-turn TTT must be less than the calculated time-to-collision TTC.

The block 62 calculates the time-to-brake TTB; that is, the braking time needed to avoid an impending collision by applying the brakes of the host vehicle 10. In a typical hydraulic braking system, a period of evasive braking is considered to consist of three consecutive stages: a pre-charge stage, a pressure build-up stage, and a maximum braking stage. The time-to-brake TTB can be estimated as the sum of three corresponding time intervals. In the pre-charge stage, the brake pads are moved into contact with the wear surface of the brake rotors or drums. This stage produces little or no braking effort, and is modeled as a calibrated delay time (pre-charge delay time PCDT) for purposes of calculating TTB. If the brake switch or a hydraulic pressure transducer indicates that the driver has already depressed the brake pedal, the pre-charge delay time is set to zero. The pressure build-up stage is a period of time during which the braking effort rises to its full value, and the time associated with this stage may also be calibrated for a given type of vehicle and braking system. Finally, the maximum braking stage is a period of time during which full braking effort (1g of deceleration, for example) is sustained. This final period of time is modeled as a combined function of the braking deceleration, the speed VS of the host vehicle 10, and the coefficient of friction COF between its tires and the road surface. As above, the coefficient of friction COF is normally set to a value of nearly 1.0 (dry road surfaces), but is lowered when the locking characteristics of the brakes indicate that the road surface is wet or slippery.

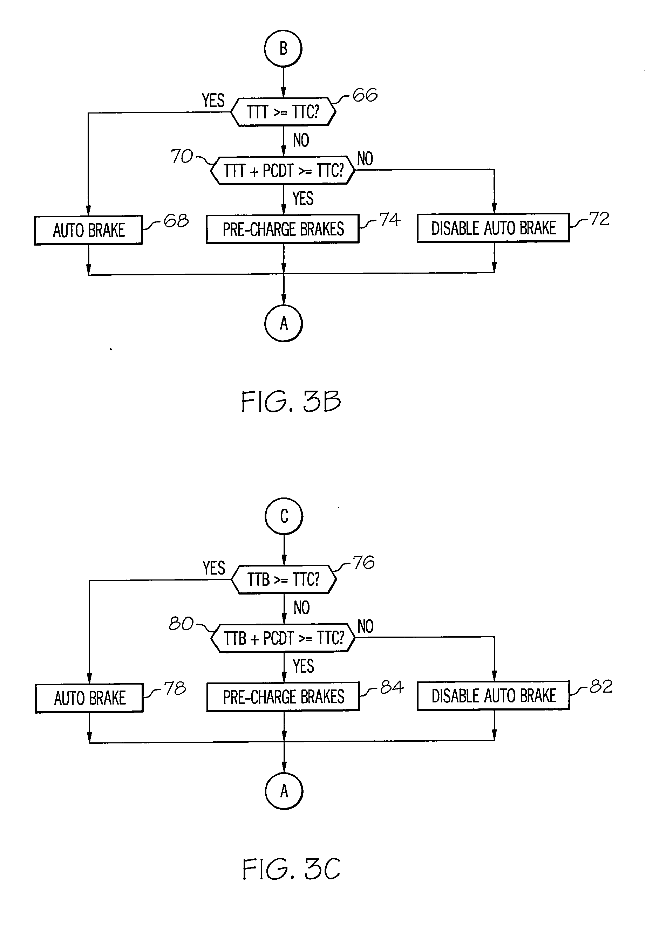

Block 64 compares the computed values of time-to-turn TTT and time-to-brake TTB. If TTT is less than TTB, a turning solution is selected, and the blocks 66-74 of FIG. 3B are executed to determine if automatic braking should be initiated based on a comparison of TTT with the time-to-collision TTC. If TTT is equal to or greater than TTB, a braking solution is selected, and the blocks 76-84 of FIG. 3C are executed to determine if automatic braking should be initiated based on a comparison of TTB with the time-to-collision TTC.

If a turning solution is selected (i.e., TTT < TTB), block 66 of FIG. 3B is first executed to determine if the time-to-turn TTT is equal to or greater than the time-to-collision TTC. If so, the impending collision is unavoidable, and the block 68 is executed to initiate automatic braking and deployment or arming of various supplemental restraint devices in the host vehicle 10. If TTT < TTC, the impending collision is deemed to be avoidable by braking. However, the block 70 is executed to compare the sum (TTT + PCDT) to TTC, where TCDT is the aforementioned pre-charge delay time associated with the pre-charge stage of braking. If the sum (TTT + PCDT) is less than TTC, the existence of the pre-charge delay will not make the collision unavoidable, and block 72 is executed to release automatic braking if already initiated. This same result occurs in cases where the term TTT is zeroed by block 60 to disable automatic braking, as mentioned above. However, if the sum (TTT + PCDT) is equal to or greater than TTC, the braking delay due to the pre-charge stage will make the collision unavoidable, and block 74 is executed to pre-charge the brakes to optimize collision mitigation due to braking, as well as to deploy or arm supplemental restraint devices in the host vehicle 10.

If a braking solution is selected (i.e., TTT >= TTB), block 76 is first executed to determine if the time-to-brake TTB is equal to or greater than the time-to-collision TTC. If so, the impending collision is unavoidable, and the block 78 is executed to initiate automatic braking and deployment or arming of the supplemental restraint devices in host vehicle 10. If TTB < TTC, the impending collision is deemed to be avoidable by braking. However, the block 80 is executed to compare the sum (TTB + PCDT) to TTC, where TCDT is the aforementioned pre-charge delay time associated with the pre-charge stage of braking. If the sum (TTB + PCDT) is less than TTC, the existence of the pre-charge delay will not make the collision unavoidable, and block 82 is executed to release automatic braking if already initiated. However, if the sum (TTB + PCDT) is equal to or greater than TTC, the braking delay due to the pre-charge stage will make the collision unavoidable, and block 84 is executed to pre-charge the brakes to optimize collision mitigation due to braking, as well as to deploy or arm supplemental restraint devices in host vehicle 10.

In summary, the method of the present invention provides collision prediction and mitigation that has immunity from false alarms and yet provides effective collision mitigation, particularly in situations where the driver fails to initiate evasive maneuvers. While the present invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

**Claims**

1. A method of mitigating an impending collision of a host vehicle (10) with a target obstacle (12), comprising the steps of:

   detecting a time-to-collision (14, 16; 42) between the host vehicle (10) and the target obstacle (12);
   calculating a steering radius (18; 56) of the host vehicle (10) based on a velocity of the host (10) vehicle and a lateral acceleration parameter;
   estimating a time-to-turn (18; 56) for avoiding the impending collision by steering the host vehicle (10) based on the calculated steering radius;
   estimating a time-to-brake (20; 62) for avoiding the impending collision by braking the host vehicle (10);
   selecting a minimum time (22; 64) for avoiding the impending collision by steering or braking the host vehicle (10); and
   initiating automatic braking (26; 66, 68; 76, 78) of the host vehicle (10) if the selected minimum time exceeds the detected time-to-collision.

2. The method of claim 1, including the steps of:

   sensing an evasive steering maneuver (50) of the host vehicle (10);
   setting the lateral acceleration parameter to a minimum acceleration value (52) that results in an artificially high estimation of the time-to-turn if said evasive steering maneuver is not sensed; and
   setting the lateral acceleration parameter (54) to a value indicative of an actual lateral acceleration of the host vehicle (10) if said evasive steering maneuver is sensed.

3. The method of claim 1, including the steps of:

   determining a lateral acceleration (28; 48) of the host vehicle (10);
   setting the lateral acceleration parameter to a minimum acceleration value (52) that results in an artificially high estimate of the time-to-turn if the determined lateral acceleration is below said minimum acceleration value (50); and
   setting the lateral acceleration parameter based on the determined lateral acceleration (54) if the determined lateral acceleration is above said minimum acceleration value (50).

4. The method of claim 3, including the step of:

   setting the lateral acceleration parameter incrementally higher than the determined lateral acceleration (54) if the determined lateral acceleration is above said minimum acceleration value (50).

5. The method of claim 1, including the steps of:

   sensing a lateral offset distance (14) between the host vehicle (10) and the target obstacle (12); and
   disabling automatic braking (60) of the host vehicle (10) if the lateral acceleration parameter exceeds a reference acceleration, the sensed lateral offset distance is less than a reference distance, and the estimated time-to-turn exceeds the detected time-to-collision (58).

6. The method of claim 1, where braking of the host vehicle (10) is preceded by a pre-charge delay time during, and the method includes the steps of:

   initiating automatic brake pre-charging (74; 84) of the host vehicle (10) if the selected minimum time is less than the detected time-to-collision, but within said pre-charge delay time of the detected time-to-collision (66, 70; 76, 80).

FIG. 1

FIG. 2

INITIALIZATION — 40

CALCULATE TTC = R/RR — 42

VS> MIN_SPEED
AND
RR < MIN_RATE
AND
TTC <MAX_TIME? — 44

YES → DISABLE AUTO-BRAKE — 46 → A

NO

ESTIMATE LAT_ACC — 48

|LAT_ACC| >
MIN_TURN_ACC? — 50

YES → CA_LAT_ACC=
|LAT_ACC| + ACC_STEP — 54

NO → CA_LAT_ACC
MIN_TURN_ACC — 52

CALCULATE TTT = F(LOD,
VS, CA_LAT_ACC, COF) — 56

CA_LAT_ACC>MAX ACC
AND
LOD < MIN_DIST
AND
TTT> TTC — 58

YES → SET TTT = 0 — 60

NO

CALCULATE TTB = F(BRAKE DELAY,
RANGE_RATE, MAX_BRAKE_ACC, COF) — 62

TTT < TTB? — 64

YES → B

NO → C

FIG. 3A

7

B

YES ← TTT >= TTC? ⌐66

NO

70 ⌐ TTT + PCDT >= TTC? NO →

YES

AUTO BRAKE ⌐68   PRE-CHARGE BRAKES ⌐74   DISABLE AUTO BRAKE ⌐72

A

*FIG. 3B*

C

YES ← TTB >= TTC? ⌐76

NO

80 ⌐ TTB + PCDT >= TTC? NO →

YES

AUTO BRAKE ⌐78   PRE-CHARGE BRAKES ⌐84   DISABLE AUTO BRAKE ⌐82

A

*FIG. 3C*

**European Patent Office**

**EUROPEAN SEARCH REPORT**

Application Number

EP 07 07 5676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 323 603 A (NISSAN) 2 July 2003 (2003-07-02) * paragraphs [0028], [0029], [0040], [0041]; figures 2,9 * ----- | 1 | INV. B60T7/22 |
| A | WO 03/007271 A (BOSCH) 23 January 2003 (2003-01-23) * page 3, line 5 - page 4, line 5 * ----- | 1-4 | |
| A | WO 2006/061106 A (DAIMLERCHRYSLER) 15 June 2006 (2006-06-15) * claims 1-3 * ----- | 1-4 | |
| A | US 2004/193374 A1 (HAC ET AL.) 30 September 2004 (2004-09-30) ----- | | |

**TECHNICAL FIELDS SEARCHED (IPC)**

B60T
B60W
B60K

The present search report has been drawn up for all claims

| Place of search | Date of completion of the search | Examiner |
|---|---|---|
| Berlin | 23 November 2007 | Krieger, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 07 5676

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2007

| Patent document cited in search report | | Publication date | Patent family member(s) | | Publication date |
|---|---|---|---|---|---|
| EP 1323603 | A | 02-07-2003 | CN | 1425580 A | 25-06-2003 |
| | | | DE | 60209663 T2 | 28-12-2006 |
| | | | JP | 3642314 B2 | 27-04-2005 |
| | | | JP | 2003175809 A | 24-06-2003 |
| | | | KR | 20030047835 A | 18-06-2003 |
| | | | US | 2003106732 A1 | 12-06-2003 |
| WO 03007271 | A | 23-01-2003 | DE | 10231584 A1 | 27-03-2003 |
| | | | EP | 1412930 A2 | 28-04-2004 |
| | | | JP | 2004535031 T | 18-11-2004 |
| | | | US | 2004030497 A1 | 12-02-2004 |
| WO 2006061106 | A | 15-06-2006 | DE | 102004059002 A1 | 14-06-2006 |
| US 2004193374 | A1 | 30-09-2004 | NONE | | |

EPO FORM P0459

For more details about this annex : see Official Journal of the European Patent Office, No. 12/82

**EP 1 889 765 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6084508 A, Mai